# FASCICULE DE BREVET EUROPEEN

(11) **EP 4 559 296 B1**
(45) Date de publication et mention de la délivrance du brevet: **24.06.2026**
(21) Numéro de dépôt: 24214585.2
(22) Date de dépôt: 21.11.2024
(51) Int. Cl.: A01B 39/18, A01M 21/02

(54) **DISPOSITIF D'ARRACHAGE DE MAUVAISES HERBES**
UNKRAUTREISSVORRICHTUNG
WEED REMOVER

(30) Priorité: 24.11.2023 FR 2312997
(43) Date de publication de la demande: 28.05.2025
(73) Titulaire: Bon, Alain, 08210 Euilly Et Lombut (FR)
(72) Inventeur: Bon, Alain, 08210 Euilly Et Lombut (FR)
(74) Mandataire: Cabinet Bleger-Rhein-Poupon

(56) Documents cités:
- AU-A- 5 476 673
- US-A- 1 538 829
- US-A- 4 027 733
- US-B1- 9 756 845

## Description

La présente invention a pour objet un dispositif d'arrachage de mauvaises herbes, attelable à un engin tracteur.

Du fait des nouvelles normes environnementales, l'élimination des mauvaises herbes ne peut plus être réalisée au moyen de produits de traitement, elle ne peut être réalisée que mécaniquement, et essentiellement manuellement.

Le document de brevet australien portant le numéro AU 54766 73 divulgue un dispositif d'arrachage de mauvaises herbes pouvant être attelé à un engin tracteur, avec un châssis sur lequel sont montés trois rouleaux de diamètres approximativement équivalents et disposés de manière à ce que la surface de roulement de chacun des rouleaux soit en contact avec la surface de roulement des deux autres rouleaux.

En fonctionnement, les mauvaises herbes qui entrent en contact avec les surfaces des deux rouleaux contre-rotatifs les plus proches du sol sont coincées entre celles-ci et sont arrachées, le troisième rouleau étant supposé, du fait de son contact avec chacun des deux premiers rouleaux, faciliter l'arrachage des mauvaises herbes.

Cela étant, ce dispositif est peu efficace, en particulier sur des mauvaises herbes de hauteur réduite, et la multiplicité des rouleaux entraîne un risque de coincement des mauvaises herbes de hauteur importante entre ceux-ci.

Ainsi, en ce qui concerne les grandes surfaces agricoles, il n'existe pas d'outil permettant un arrachage mécanisé efficace, et l'arrachage manuel n'est pas rentable.

La présente invention, a pour but de remédier à cette carence en proposant un dispositif d'arrachage de mauvaises herbes, attelable à un engin tracteur.

Le dispositif d'arrachage de mauvaises herbes attelable à un engin tracteur selon l'invention, se caractérise en ce qu'il comporte un châssis porté par ledit engin tracteur, sur lequel sont montés :
- d'une part un rotor comprenant un arbre transversal, entraîné en rotation dans le sens de rotation des roues dudit engin tracteur et à une vitesse de rotation supérieure, portant juxtaposés des bras radiaux, décalés angulairement deux-à-deux, et dont l'extrémité de chacun est constituée d'une semelle courbe, de courbure concentrique audit arbre,
- et d'autre part, en arrière et sous ledit rotor, deux rouleaux juxtaposés, dont les axes sont portés par un cercle concentrique audit arbre et en sorte que lesdits rouleaux, qui tournent dans le sens inverse de celui dudit rotor, soient affleurants auxdites semelles, celui desdits rouleaux disposé le plus bas, s'étendant à proximité du sol.

On comprendra qu'en utilisation, dans un premier temps le rouleau le plus bas puis le second rouleau, tendent à relever l'herbe, tandis que les semelles du rotor viennent coincer l'herbe contre lesdits rouleaux, et du fait de la différence de vitesse de rotation, l'herbe est déracinée.

Selon une caractéristique additionnelle du dispositif d'arrachage selon l'invention, les bras radiaux consistent en des bras diamétraux, comportant deux semelles diamétralement opposées.

Selon une autre caractéristique additionnelle du dispositif d'arrachage selon l'invention, chacune des semelles est recouverte d'une garniture élastique.

La garniture élastique peut consister en une plaque de caoutchouc ou analogue, elle permet d'assurer le coincement de l'herbe contre les rouleaux.

Selon une autre caractéristique additionnelle du dispositif d'arrachage selon l'invention, la rotation des rouleaux est assurée par le contact avec les semelles, au travers de l'herbe coincée.

Selon une autre caractéristique additionnelle du dispositif d'arrachage selon l'invention, le rotor comporte une succession de flasques régulièrement espacés et portant deux à deux, des bras radiaux.

Selon une autre caractéristique additionnelle du dispositif d'arrachage selon l'invention, la vitesse de rotation du rotor est asservie à celle de déplacement de l'engin tracteur.

Les avantages et les caractéristiques du dispositif d'arrachage selon l'invention, ressortiront plus clairement de la description qui suit et qui se rapporte au dessin annexé, lequel en représente un mode de réalisation non limitatif.

Dans le dessin annexé :
[Fig.1] représente une vue partielle schématique de profil du dispositif d'arrachage de mauvaises herbes selon l'invention.
[Fig.2] représente en perspective d'une partie du même dispositif d'arrachage.
[Fig.3] représente une vue partielle schématique de profil d'une partie du même dispositif.

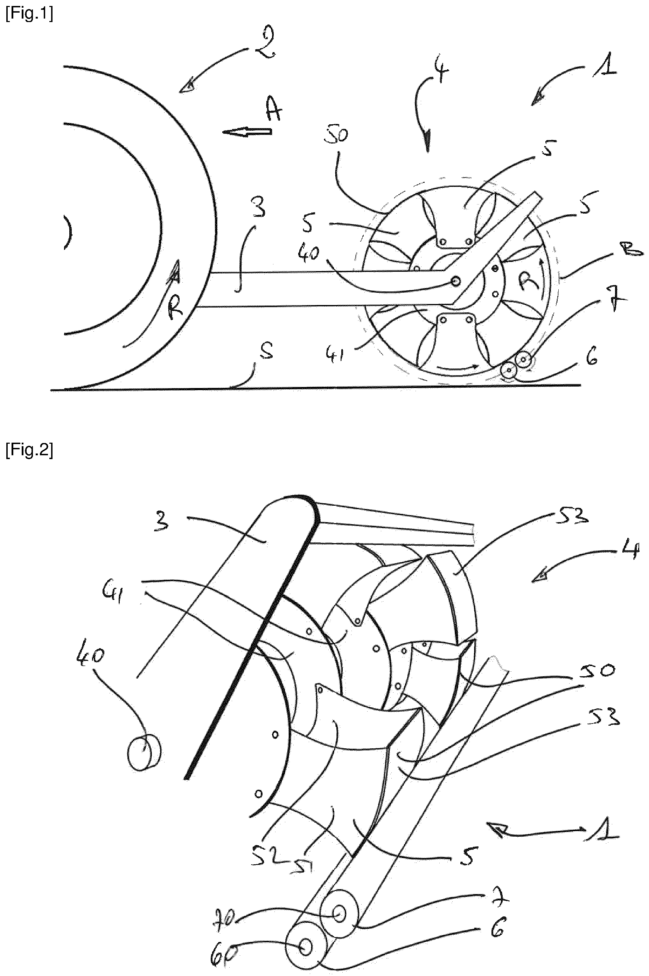

En référence à la figure 1, on peut voir un dispositif 1 d'arrachage de mauvaises herbes selon l'invention, attelé à l'arrière d'un engin tracteur 2, et tiré par celui-ci dans le sens A.

Ce dispositif 1 d'arrachage de mauvaises herbes comporte un châssis 3 portant un rotor transversal 4 monté en rotation sur un arbre 40, dans le sens R identique à celui des roues 10 de l'engin tracteur 1, et entraîné par des moyens moteurs non représentés.

En référence également à la figure 2, on peut voir que le rotor 4 comporte une succession de flasques 41 régulièrement espacés et portant deux à deux, des bras radiaux 5.

Non limitativement, deux flasques 41 adjacents portent entre eux deux bras radiaux 5 diamétralement opposés. Chaque bras 5 comporte à son extrémité libre une semelle 50 de largeur correspondant à l'écartement entre les deux flasques 41, et d'une courbure concentrique à l'arbre 40, en sorte qu'en rotation les semelles 50 s'inscrivent dans un cercle C.

Du point de vue construction, chaque bras 5 comprend deux plats 51 et 52 solidaires de la semelle 50, et solidarisables chacun à un flasque 41.

Sur une paire de flasques 41 sont donc fixés deux bras 5 diamétralement opposés, tandis que l'un des flasques 41 de cette paire de flasques 41 porte, avec le flasque 41 suivant, deux autres bras 5 diamétralement opposés mais décalés angulairement par rapport aux deux bras 5 voisins, en l'occurrence, non limitativement, de 90°.

Ce décalage est bien entendu lié aux dimensions des semelles 50, de manière sur la figure 1, on peut voir que ce décalage est de 45°.

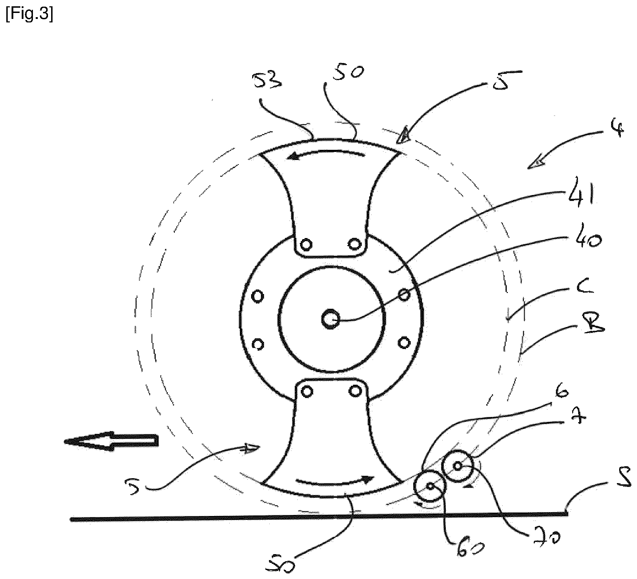

En référence également à la figure 3, on peut voir que le dispositif d'arrachage de mauvaises herbes selon l'invention comporte également deux rouleaux 6 et 7, disposés transversalement en arrière du rotor 4 et sous celui-ci à proximité du sol S, montés en libre rotation sur des arbres, respectivement 60 et 70, dont les axes sont portés par un cercle B concentrique à l'arbre 40, tandis que ces rouleaux 6 et 7 sont tangents au cercle C, c'est-à-dire aux semelles 50, le rouleau 6 étant disposé le plus près de sol S.

Lors du déplacement de l'ensemble, le rouleau 6, puis le rouleau 7 passent sous l'herbe à arracher, tandis que les semelles 50, au gré de la rotation du rotor 4, viennent coincer cette herbe contre les rouleaux 6 et 7, pour l'arracher et la projeter en arrière du rotor 4.

Les rouleaux 6 et 7 ainsi que le rotor 4 sont réglés en hauteur pour ne pas entrer en contact avec le sol S, et en sorte que la zone au niveau de laquelle les semelles 50 entrent en contact avec les rouleaux 6 et 7, coïncide avec la taille des herbes à arracher.

On notera que de manière avantageuse, les semelles 50 sont munies chacune d'une garniture 53 en matériau souple de type élastomère ou caoutchouc, permettant d'assurer le bon coincement de l'herbe contre les rouleaux 6 et 7.

La vitesse de rotation du rotor 4 est telle que la vitesse linéaire des semelles 50 soit supérieure à la vitesse linéaire de l'engin tracteur 2, et surtout apte à permettre de traiter toute la surface enherbée, sachant que les semelles 50 sont diamétralement opposées.

Ceci étant il est possible de prévoir que la vitesse de rotation du rotor 4 soit asservie à celle de déplacement de l'engin tracteur 2.

## Revendications

1. Dispositif d'arrachage de mauvaises herbes attelable à un engin tracteur **caractérisé en ce qu'**il comporte un châssis (3) porté par ledit engin tracteur (2), sur lequel sont montés :
- d'une part un rotor (4) comprenant un arbre transversal (40), entraîné en rotation dans le sens de rotation des roues (20) dudit engin tracteur (2) et à une vitesse de rotation supérieure, portant juxtaposés des bras radiaux (5), décalés angulairement deux-à-deux, et dont l'extrémité de chacun est constituée d'une semelle courbe (50), de courbure concentrique audit arbre (40),
- et d'autre part, en arrière et sous ledit rotor (4), deux rouleaux juxtaposés (6, 7), dont les axes sont portés par un cercle (B) concentrique audit arbre (40) et en sorte que lesdits rouleaux (6, 7), qui tournent dans le sens inverse de celui dudit rotor (4), soient affleurants auxdites semelles (50), celui desdits rouleaux (6, 7) disposé le plus bas, s'étendant à proximité du sol (S).

2. Dispositif d'arrachage (1) selon la revendication 1, **caractérisé en ce que** les bras radiaux (5) consistent en des bras diamétraux, comportant deux semelles (50) diamétralement opposées.

3. Dispositif d'arrachage (1) selon la revendication 1 ou la revendication 2, **caractérisé en ce que** chacune des semelles (50) est recouverte d'une garniture élastique (53).

4. Dispositif d'arrachage (1) selon l'une quelconque des revendications 1 à 3, **caractérisé en ce que** la rotation des rouleaux (6, 7) est assurée par le contact avec les semelles (50), au travers de l'herbe coincée.

5. Dispositif d'arrachage (1) selon l'une quelconque des revendications 1 à 4, **caractérisé en ce que** le rotor (4) comporte une succession de flasques (41) régulièrement espacés et portant deux à deux, des bras radiaux (5).

6. Dispositif d'arrachage (1) selon l'une quelconque des revendications 1 à 5, **caractérisé en ce que** la vitesse de rotation du rotor (4) est asservie à celle de déplacement de l'engin tracteur (2).

## Patentansprüche

1. An ein Zugfahrzeug ankoppelbare Unkrautausreißvorrichtung, **dadurch gekennzeichnet, dass** sie einen von dem Zugfahrzeug (2) getragenen Rahmen (3) umfasst, an dem angebracht sind:
- einerseits ein Rotor (4) mit einer Querwelle (40), die in Drehrichtung der Räder (20) des Zugfahrzeugs (2) und mit einer höheren Drehzahl angetrieben wird und nebeneinander angeordnete Radialarme (5) trägt, die paarweise winklig versetzt sind und deren jeweiliges Ende aus einer gekrümmten Sohle (50) besteht, deren Krümmung konzentrisch zu der Welle (40) ist,
- und andererseits, hinter und unter dem Rotor (4), zwei nebeneinander angeordnete Walzen (6, 7), deren Achsen von einem zur Welle (40) konzentrischen Kreis (B) getragen sind, und zwar derart, dass die Walzen (6, 7), die sich entgegen der Drehrichtung des Rotors (4) drehen, bündig mit den Sohlen (50) liegen, wobei diejenige der Walzen (6, 7), die am tiefsten angeordnet ist, sich in der Nähe des Bodens (S) erstreckt.

2. Ausreißvorrichtung (1) nach Anspruch 1, **dadurch gekennzeichnet, dass** die Radialarme (5) aus diametralen Armen bestehen, die zwei diametral gegenüberliegende Sohlen (50) aufweisen.

3. Ausreißvorrichtung (1) nach Anspruch 1 oder Anspruch 2, **dadurch gekennzeichnet, dass** jede der Sohlen (50) mit einer elastischen Einlage (53) überzogen ist.

4. Ausreißvorrichtung (1) nach einem der Ansprüche 1 bis 3, **dadurch gekennzeichnet, dass** die Drehung der Walzen (6, 7) durch den Kontakt mit den Sohlen (50) über das eingeklemmte Gras gewährleistet wird.

5. Ausreißvorrichtung (1) nach einem der Ansprüche 1 bis 4, **dadurch gekennzeichnet, dass** der Rotor (4) eine Abfolge von in regelmäßigen Abständen angeordneten Flanschen (41) aufweist, die paarweise Radialarme (5) tragen.

6. Ausreißvorrichtung (1) nach einem der Ansprüche 1 bis 5, **dadurch gekennzeichnet, dass** die Drehzahl des Rotors (4) an die Fahrgeschwindigkeit des Zugfahrzeugs (2) angepasst ist.

## Claims

1. A weed pulling device attachable to a tractor machine, **characterised in that** it comprises a chassis (3) carried by said tractor machine (2), on which are mounted:
- on the one hand, a rotor (4) comprising a transverse shaft (40), rotatably driven in the direction of rotation of the wheels (20) of said tractor machine (2) and at a higher rotational speed, bearing juxtaposed radial arms (5) angularly offset two by two, and the end of each of which consists of a curved shoe (50), with a curvature concentric to said shaft (40),
- and on the other hand, behind and under said rotor (4), two juxtaposed rollers (6, 7), whose axes are carried by a circle (B) concentric to said shaft (40) and so that said rollers (6, 7), which rotate in the opposite direction to that of said rotor (4), are flush with said shoes (50), that of said rollers (6, 7) disposed at the lowest point, extending in proximity to the ground (S).

2. The pulling device (1) according to claim 1, **characterised in that** the radial arms (5) consist of diametrical arms, including two diametrically opposed shoes (50).

3. The pulling device (1) according to claim 1 or claim 2, **characterised in that** each of the shoes (50) is covered with an elastic lining (53).

4. The pulling device (1) according to any one of claims 1 to 3, **characterised in that** the rotation of the rollers (6, 7) is ensured by contact with the shoes (50), through the trapped grass.

5. The pulling device (1) according to any one of claims 1 to 4, **characterised in that** the rotor (4) comprises a succession of flanges (41) evenly spaced and carrying radial arms (5) two by two.

6. The pulling device (1) according to any one of claims 1 to 5, **characterised in that** the rotational speed of the rotor (4) is dependent on that of the movement of the tractor machine (2).
